**Europäisches Patentamt**

**European Patent Office**

**Office européen des brevets**

(19)

(11) Veröffentlichungsnummer : **0 472 499 A1**

# (12) EUROPÄISCHE PATENTANMELDUNG

(21) Anmeldenummer : **91810642.8**

(22) Anmeldetag : **14.08.91**

(51) Int. Cl.⁵ : **B32B 27/18, B65D 23/08**

(30) Priorität : **21.08.90 CH 2704/90**

(43) Veröffentlichungstag der Anmeldung :
**26.02.92 Patentblatt 92/09**

(84) Benannte Vertragsstaaten :
**AT BE CH DE DK ES FR GB GR IT LI LU NL SE**

(71) Anmelder : **ALUSUISSE-LONZA SERVICES AG**
**Feldeggstrasse 4**
**CH-8034 Zürich (CH)**

(72) Erfinder : **Pietzsch, Joachim**
**Zollstrasse 26**
**CH-8212 Neuhausen am Rheinfall (CH)**
Erfinder : **Ziegler, Andreas**
**Stettemerstrasse 145**
**CH-8207 Schaffhausen (CH)**

(54) **Verpackungsbehälter.**

(57) Verpackungsbehälter mit einem die äusseren Begrenzungen im wesentlichen vollständig umhüllenden Etikett, wobei das Etikett eine Folie oder eine Verbundfolie darstellt, welche eine Trägerfolie resp. eine Trägerfolie und eine Oberflächenfolie enthält, wobei die äusseren Begrenzungsflächen des Behälters mit der Trägerfolie verbunden sind, wobei am Etikett auf der Trägerfolie resp. zwischen der Trägerfolie und der Oberflächenfolie eine durch Vakuumdünnschichttechnik erzeugte keramische Schicht eines Oxides oder Nitrides von Metallen oder Halbmetallen oder eines Gemisches von Oxiden und/oder Nitriden von Metallen und/oder Halbmetallen angeordnet ist.

EP 0 472 499 A1

Jouve, 18, rue Saint-Denis, 75001 PARIS

Vorliegende Erfindung betrifft einen Verpackungsbehälter mit einem die äusseren Begrenzungen teilweise oder vollständig umhüllenden Etikett, wobei das Etikett eine Folie oder eine Verbundfolie darstellt, welche eine Trägerfolie resp. eine Trägerfolie und eine Oberflächenfolie enthält, wobei die äusseren Begrenzungsflächen des Behälters mit der Trägerfolie verbunden sind.

Es ist bekannt, dosen- oder becherförmige Behälter beispielsweise durch Spritzgiessen herzustellen. Dabei wird eine thermoplastische Formmasse durch Erwärmen erweicht und unter Druck in eine Hohlform eingespritzt. Die zu einem Behälter verformte Masse kann nach dem Abkühlen der Hohlform entnommen werden.

Es ist auch bekannt, beim Herstellen einer Dose oder einem ähnlichen Gegenstand mit einer Deckschicht auf einer Aussenseite, z.B. als Diffusionssperre oder Etikett, eine Folie in die geöffnete Form einer Spritzgiessmaschine einzuführen, worauf die Form geschlossen und die Kunststoffmasse eingespritzt wird. Das Zufügen einer Folie kann bezwecken, die hohe Permeabilität für Gase, Aromastoffe und Wasserdampf von Thermoplastmaterialien zu beseitigen. Für das Verbinden von Folie oder Etikett und thermoplastischem Kunststoff wurde in der DE-PS 23 62 174 eine Spritzgiessform beschrieben.

Aus der GB 2 205 295 A ist eine durch Spritzgiessen geformte Kunststoffflasche bekannt, mit einem an der äusseren Oberfläche angebrachten Etikett, wobei die Teile der Aussenwand der Flasche, die durch das Etikett bedeckt sind, als Gasbarriere zur Reduktion oder Verhütung des Gasdurchtrittes dienen. Das Etikett enthält eine Metallfolie.

In der DE-A-37 00 274 wird eine Vorrichtung beschrieben, die es ermöglicht vor dem Einspritzen der erweichten Formmasse in die Hohlform ein Etikett in die Hohlform einzulegen.

Das Deutsche Gebrauchsmuster UI-G 89 04 414.2 beschreibt einen dosen- oder becherförmingen Verpackungsbehälter mit einem den äusseren Umfang umhüllenden Etikett, wobei das Etikett aus einer Verbundfolie besteht, die ihrerseits eine Trägerfolie, eine Oberflächenfolie und eine metallische Zwischenschicht aufweist und die Trägerfolie mit dem Umfang des Behälters verbunden ist. Der Vorteil einer derartigen Anordung soll darin liegen, dass der Inhalt in den Behältern vor Luftsauerstoff geschützt ist.

Die EP-A 0 187 512 weist auf eine gewickelte transparente Dose aus Kunststoff hin, wobei der Dosenkörper eine durch Vakuumverdampfung erzeugte Schicht aus Siliciumoxiden aufweist. Solche Dosen sind durchsichtig, geeignet zur Aufnahme von Getränken oder Nahrungsmitteln und der Doseninhalt kann mit Mikrowellen erwärmt werden.

Aufgabe vorliegender Erfindung ist es, Verpackungsbehälter zur Verfügung zu stellen, die für Licht und Mikrowelle transparent sind und die gegenüber Gasen und Dämpfen, beispielsweise Sauerstoff und Wasserdampf, Barriereeigenschaften aufweisen.

Bis anhin war es nur möglich, transparente Dosen durch Wickeln eines laminierten Filmes herzustellen. In den einschlägigen Kreisen war jedoch das Bedürfnis vorhanden auch Behälter anderer geometrischer Formen als Dosen und Behälter nach anderen Verfahren als das Wickeln zur Aufnahme von z.B. sauerstoffempfindlichen Gütern zur Verfügung zu stellen, wobei die Behälter die Eigenschaften der Transparenz für Licht und Mikrowelle aufweisen sollen.

Die Aufgabe wird mit einem Verpackungsbehälter gelöst, wie eingangs beschrieben, mit den Merkmalen, dass am Etikett auf der Trägerfolie resp. zwischen der Trägerfolie und der Oberflächenfolie eine durch Vakuumdünnschichttechnik erzeugte keramische Schicht eines Oxides und/oder Nitrides von Metallen oder Halbmetallen oder eines Gemisches von Oxiden und/oder Nitriden von Metallen und/oder Halbmetallen angeordnet ist.

Beispielsweise kann sich die keramische Schicht auf der Trägerfolie, auf der dem Verpackungsbehälter zugewandten Seite, befinden. Dies trifft auf den Fall zu, dass die Trägerfolie die allein angewendete Folie des Etiketts darstellt. Wird eine Verbundfolie als Etikett verwendet, kann zweckmässigerweise die durch Vakuumdünnschichttechnik erzeugte keramische Schicht auf der Trägerfolie, der Oberflächenfolie oder auf beiden Folien aufgebracht werden.

Die keramische Schicht ist zwischen der Trägerfolie und der Oberflächenfolie angeordnet, d.h. die Schicht befindet sich auf der Trägerfolienseite, die der Oberflächenfolie zugewandt ist oder die Schicht befindet sich auf der Oberflächenfolienseite, die der Trägerfolie zugewandt ist oder die Schichten auf der Trägerfolie und der Oberflächenfolie sind einander zugewandt.

Ein andere zweckmässige Ausführungsform besteht darin, dass die durch Vakuumdünnschicht erzeugte keramische Schicht auf wenigstens einer Seite wenigstens einer Folie aufgebracht ist und diese Folie zwischen der Trägerfolie und der Oberflächenfolie angeordnet ist. Diese Folie wird im weiteren als Zwischenfolie bezeichnet.

Die Zwischenfolie kann ihrerseits eine Folie, ein Folienverbund oder ein Laminat darstellen.

Die keramische Schicht der Oxide kann auch sinngemäss auf der Trägerfolie und/oder der Oberflächenfolie, wie beschrieben, vorliegen und es kann sich wenigstens eine weitere keramische Schicht auf einer dazwischen angeordneten Zwischenfolie befinden.

Die das Etikett bildende Verbundfolie ist zweckmässig dreischichtig, aus einer Trägerfolie, einer Oxidschicht und einer Oberflächenfolie, aufgebaut. Gegebenenfalls kann sich zwischen der Trägerfolie und der Oberflächenfolie wenigstens eine weitere Folie, ein weiterer Folienverbund oder ein Laminat befinden.

Zweckmässig ist auch ein Etikett, das mehr als dreischichtig aufgebaut ist und insbesondere eine Zwischenfolie enthält.

Die Behälter an sich können beispielsweise durch Spritzgiessen oder Thermoformen hergestellt werden. Solche Verfahren sind an sich bekannt. Die Werkstoffe aus denen Behälter durch Spritzgiessen hergestellt werden können, sind beispielsweise Thermoplaste, insbesondere Thermoplaste auf Olefin-, Ester-, Styrol und Vinyl-Basis. Thermoformen kann mittels Folien, Folienverbunden oder Laminaten erfolgen.

Folien, Folienverbunde oder Laminate zur Herstellung von Verpackungsbehältern sind an sich bekannt und zweckmässig werden dafür Werkstoffe aus der Reihe der Thermoplaste angewendet. In beispielhafter Aufzählung können als Thermoplaste die thermoplastischen Polymere auf Acetal-,Acryl-, Amid-, Arylensulfid-, Arylensulfon-, Arylencarbonat-, Carbonat-, Cellulose-, Ester-, Imid-, Olefin-, Styrol- und Vinyl-Basis genannt werden.

Die Behälter werden mit einem die äusseren Begrenzungen umhüllenden Etikett versehen. Die äusseren Begrenzungen umfassen sinngemäss alle äusseren Seiten-, Boden- und/oder Deckelflächen. Entsprechend der Aufgabe des Etiketts ist es vorteilhaft, wenn Behälteraussenseite soweit vom Etikett überdeckt ist, dass keine nennenswerten Flächen des Behälters unbedeckt resp. ungeschützt bleiben.

Gegebenenfalls kann das Etikett auch innen im Behälter angebracht sien, wobei obige Bedingungen sinngemäss gelten.

Für die Trägerfolien, Oberflächenfolien und die Zwischenfolien können als Werkstoffe thermoplastische Polymere beispielsweise aus der Reihe auf Acetal-, Acryl-, Amid-, Arylenoxid-, -Sulfon- und -sulfid-, Carbonat-Cellulose-, Ester-, Imid-, Olefin-, Styrol- und Vinyl-Basis angewendet werden.

Beispiele von Thermoplasten auf Acetal-Basis sind Polyvinylbutyral, Polyformaldehyd, Polyacetaldehyd, Mischpolymere und Terpolymere derselben.

Beispiele für Thermoplaste auf Acryl-Basis sind Polyalkylmethacrylate, z.B. Polymethylmethacrylate, Polytert.-butylacrylat, Mischpolymere und Terpolymere derselben, Vinyl-, Styrol-, Acrylat - und Methacrylatmischpolymere und -terpolymere von Acrylnitril und Methacrylnitril.

Zu den Thermoplasten auf Amid-Basis gehören beispielsweise Polyamid 6, ein Homopolymerisat aus ε-Caprolactam (Polycaprolactam); Polyamid 11, ein Polykondensat aus 11-Aminoundecan-säure (Poly-11-aminoundecanamid); Polyamid12, ein Homopolymerisat aus ω-Laurinlactam (Polylaurinlactam); Polyamid 6,6, ein Homopolykondensat aus Hexamethylen-diamin und Adipinsäure (Polyhexamethylenadipamid); Polyamid 6,10, einHomopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon.

Thermoplaste auf Ester-Basis sind beispielsweise Polyalkylenterephthalate oder Polyalkylenisophthalat, mit Alkylengruppen oder - resten mit 2 bis etwa 10 Kohlenstoffatomen, wobei die Alkylengruppen oder -reste auch mit wenigstens einem -O- unterbrochen sein können, wie z.B. Polyethylenterephthalat, Polybutylenterephthalat (Polytetramethylenterephthalat), Polydecamethylenterephthalat, Poly-1,4-cyclohexyldimethylolterephthalat, Mischpolymere und Terpolymere davon.

Beispiele für Thermoplaste auf Arylenoxid-, Arylensulfonund Arylensulfid- Basis sind Polyphenylenoxid, Polyphenylensulfid, Polyethersulfon, Polyarylether, Polyarylsulfon oder Polysulfon.

Thermoplaste auf Acetal-, Acryl-, Ester- und Arylenbasis können z.B. auch als Block-Copolymere oder als Pfropfpolymere angewendet werden.

Thermoplaste auf Cellulose-Basis sind z.B. Celluloseester, wie Celluloseacetat, Cellulosepropionat, Cellulosebutyrat und Celluloseacetatbutyrat oder polymermodifiziertes Celluloseacetatbutyrat.

Beispiele für Thermoplaste auf Imid-Basis sind Poly-N-alkylenmaleimide, wie Poly-N-methylmaleimid Mischpolymere, Terpolymere oder Blockmischpolymer- und gepfropfte Kautschukmodifikationen derselben, ferner Polyimide und Copoly-(Imid/Amide) von Pyromellithdianhydrid und m-Phenylendiamin oder ähnliche Polyarylenimide und Copoly-(Arylenimid/Amide).

Beispiele für Thermoplaste auf Olefin-Basis sind Polyolefine, wie Polyethylen, z.B. Polyethylen hoher Dichte (HDPE, Dichte grösser als 0,944 g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylen, Poly-1-buten, Poly-3-methylbuten, Poly-4-methylpenten und Copolymere davon, wie z.B. von Polyethylen mit Vinylacetat, Acrylsäure, Methacrylsäure, Acrylestern, Tetrafluorethylen oder Polypropylen, sowie statistische Copolymere, Block-Copolymere oder Olefinpolymer-Elastomer-Mischungen.

Beispiele für Thermoplaste auf Styrol-Basis sind Polystyrol, Co- und Ter-Polymerisate davon, Copolymerisate mit Acrylnitril (SAN), Copolymerisate mit Butadien (SB) und Terpolymerisate, die Synthesekautschuke und Acrylnitril enthalten (ABS).

Als Thermoplaste auf Vinyl-Basis, die angewendet werden können, sind zu nennen Polyvinylchlorid, Copolymere und Pfropfpolymere davon, beispielsweise Vinylchlorid-Ethylen-Polymer, Vinylchlorid-Ethylen-Methacrylat-Polymer, Vinylchlorid-Ethylen-Vinylacetat-Polymer, Vinylchlorid-Methylmethacrylat-Polymer, Vinylchlorid-Octylacrylat-Polymer, Vinylchlorid-Vinylidenchlorid-Polymer, Vinylchlorid-Vinylacetat-Maleinsäure-Polymer ode Vinylchlorid-Vinylidenchlorid-Acrylnitril-Polymer, sowie gepfropfte Modifikationen.

Die Thermoplaste auf Vinyl-Basis können auch auf an sich bekannte Weise mit Primär- oder Sekundärweichmacher weichgemacht sein.

Die Trägerfolie kann vorzugsweise aus einem Polyolefin, wie Polyethylen oder Polypropylen, Polyester, wie Polyethylenterephthalat oder Copolymerisaten, enthaltend die genannten Polymere, bestehen oder diese enthalten. Bevorzugt sind axial oder biaxial orientierte Folien. Die Dicke der Trägerfolien kann z.B. zwischen 8 und 2000 µm, zweckmässig zwischen 10 und 600 µm und bevorzugt zwischen 12 und 25 µm liegen. Als Trägerfolien kommen auch Folienverbunde in Frage. Besonders bevorzugt als Trägerfolien sind biaxial orientierte Polyethylenterephthalatfolien.

Stellt die Trägerfolie die allein angewendete Folie dar, liegt die untere Dickenbegrenzung vorteilhaft bei 12 µm, während die oberen Dickenbegrenzungen die angegebenen Werte haben können.

Die Oberflächenfolie besteht aus oder enthält zweckmässig Polyolefine, wie Polyethylen oder Polypropylen, Polyester, wie Polyethylenterephthalat oder Copolymerisate enthaltend die genannten Polymere. Die Dicke der Oberflächenfolie kann 8 bis 2000 µm, zweckmässig zwischen 10 und 600 µm und bevorzugt zwischen 12 und 25 µm betragen. Die Oberflächenfolie kann gegebenenfalls auch ein Folienverbund darstellen. Besonders bevorzugt als Oberflächenfolien sind biaxial orientierte Polyethylenfolien.

Die Zwischenfolie kann eine Folie, ein Folienverbund oder ein Laminat darstellen, wobei die Dicke der Zwischenfolie z.B. 10 bis 100 µm, zweckmässig 12 bis 25 µm und bevorzugt 12 µm beträgt.

Bevorzugt als Zwischenfolie ist eine Polyalkylenterephthalat-Folie, wobei insbesondere Polyethylenterephthalat zur Anwendung gelangen kann.

Die keramische Schicht, in einer Dicke von zweckmässig 5 bis 500 nm, bevorzugt von 10 bis 200 nm und insbesondere von 20 bis 150 nm, kann sich auf der Trägerfolie, auf der Oberflächenfolie und/oder auf wenigstens einer Seite der Zwischenfolie befinden.

Stellt die Zwischenfolie einen Folienverbund oder Laminat dar, kann die keramische Schicht auf wenigstens einer Oberfläche der Folien, die den Folienverbund oder das Laminat bilden, aufgebracht sein.

Demnach ist es möglich, die Innenseite der Trägerfolie und/oder der Oberflächenfolie mit der gewählten Keramik zu beschichten. Auch können beide Innenseiten beschichtet sein. Es ist technisch ohne weiteres möglich die Aussenseiten der Trägerfolie und/oder der Oberflächenfolie zu beschichten, jedoch ist für die Praxis zu bedenken, dass die ungeschützte Oxidschicht leicht beschädigt werden kann.

In der Praxis werden insbesondere Behälter nachfolgend erläuterten Schichtaufbaues bevorzugt.

a) Behälterwandung
b) Keramikschicht
c) Trägerfolie

oder

a) Behälterwandung
b) Trägerfolie
c) Keramikschicht
d) Oberflächenfolie

oder

a) Behälterwandung
b) Trägerfolie
c) Keramikschicht
d) Zwischenfolie
e) Oberflächenfolie

Als keramische Schicht können die Oxide und/oder Nitride von Metallen oder Halbmetallen, z.B. diejenigen des Siliciums, des Aluminiums, des Eisens, Nickels, Chroms oder Bleis angewendet werden. Damit umfasst sind auch die Oxinitride der genannten Metalle oder Halbmetalle. Als keramische Schicht werden zweckmässig Oxide der allgemeinen Formel $SiO_x$, wobei x eine Zahl von 1 bis 2 darstellt, oder der allgemeinen Formal $Al_yO_z$, wobei y/z eine Zahl von 0,2 bis 1,5 darstellt, angewendet.

Bevorzugt sind die Oxide des Siliciums mit der allgemeinen Formel $SiO_x$, wobei x eine Zahl von bevorzugt 1,1 bis 1,9 und besonders bevorzugt von 1,2 bis 1,7 ist.

Die keramische Schicht wird beispielsweise durch eine Vakuumdünnschichttechnik, zweckmässig auf der Basis von Elektronenstrahlverdampfen oder Widerstandsheizen oder induktivem Heizen aus Tiegeln aufgebracht. Bevorzugt ist das Elektronenstrahlverdampfen. Die beschriebenen Verfahren können reaktiv und/oder mit Ionenunterstützung gefahren werden.

In der Praxis werden die Trägerfolie, die Zwischenfolie oder die Oberflächenfolie in eine der oben genannten Vorrichtungen zur Beschichtung vorgelegt. Die mit der Keramik zu beschichtende Oberfläche kann gegebenenfalls mit einem Haftvermittler vorbeschichtet sein. Geeignete Haftvermittler sind beispielsweise Vinylchlorid-Copolymerisate, Vinylchlorid-Vinylacetat-Copolymerisate, polymerisierbare Polyester, Vinylpyridin-Polymerisate, Vinylpyridin-Polymerisate in Kombination mit Epoxidharzen, Butadien-Acrylnitril-Methacrylsäure-Copolymerisate, Phenolharze, Kautschukderivate, Acrylharze, Acrylharze mit Phenol bzw. Epoxidharzen, oder siliciumorganische Verbindungen, wie Organosilane.

Bevorzugt werden die Organosilane. Beispiele dafür sind Trialkoxysilane mit Aminofunktionsgruppe, Trialkoxysilane mit Epoxyfunktionsgruppe, Trialkoxysilane mit Esterfunktionsgruppe, Trialkoxysilane mit aliphatischer Funktionsgruppe, Trialkoxysilane mit Glycid-oxyfunktionsgruppe, Trialkoxysilane mit Methacryloxyfunktionsgruppe, sowie Gemische derselben. Beispiele solcher Organosilane sind $\gamma$-Aminopropyltriethoxysilan und N-$\beta$-(Aminoethyl)-$\gamma$-aminopropyltrimethoxysilan, $\gamma$-(3,4-Epoxycyclohexyl)-ethyltrimethoxysilan, $\gamma$-Glycidoxypropyltrimethoxysilan, und $\gamma$-Methacryloxypropyltrimethoxysilan. Diese Verbindungen sind in der Fachwelt an sich bekannt.

Weitere geeignete Haftvermittler sind Klebstoffe wie Nitrilkautschuk-Phenolharze, Epoxide, Acrylnitril-Butadienkautschuk, urethanmodifizierte Acryle, Polyester-co-Polyamide, Heissschmelzpolyester, mit Heissschmelzpolyester vernetzte Polyisocyanate, polyisobutylenmodifizierte Styrol-Butadienkautschuke, Urethane, Ethylen-Acrylsäure-Mischpolymere und Ethylenvinylacetat-Mischpolymere.

Sowohl die Trägerfolie, die Oberflächenfolie als auch allfällige Zwischenfolien können bedruckt, konterbedruckt und/oder eingefärbt sein, wobei diese Massnahmen schon vor einer allfälligen Beschichtung mit der Keramik vorgenommen werden können. Als Druck- und Färbeverfahren eignen sich alle an sich bekannten Verfahren und insbesondere der Tief- oder der Flexodruck.

Die Behälter nach vorliegender Erfindung können demnach eine ein- oder mehrfarbige graphische Gestaltung aufweisen, die auf der Trägerfolie und/oder der Oberflächenfolie und/oder gegebenenfalls wenigstens einer Zwischenfolie jeweils auf der Aussenseite und/oder der Innenseite durch Bedrucken oder Einfärben aufgebracht ist.

Nach dem Beschichten der Trägerfolie und/oder der Oberflächenfolie und/oder gegebenenfalls wenigstens einer Zwischenfolie mit der Keramik kann die beschichtete Folie mit der oder den anderen Folien gegenkaschiert werden. Die Kaschierung kann mittels Wärme oder mit Hilfe eines Klebers und/oder Haftvermittlers erfolgen. Besonders geeignet ist ein Kaschierverfahren mittels eines Klebers, wobei als Kleber, in beispielhafter Aufzählung, lösungsmittelhaltige oder lösungsmittelfreie Kleber angewendet werden können und bezüglich der Materialauswahl auf obengenannte Aufzählung zu den Haftvermittlern und Klebern verwiesen wird.

Unter Verpackungsbehälter nach vorliegender Erfindung werden z.B. Becher, Schalen, Flaschen oder Dosen in runder, annähernd runder oder in eckiger Form oder mit abgerundeten Ecken versehenen Formen, verstanden, die durch Tiefziehen und vorzugsweise Spritzgiessen hergestellt werden.

Das Aufbringen der erfindungsgemässen Etiketten auf der Oberfläche von Verpackungsbehältern kann auf an sich bekannte Weise mit den an sich bekannten Vorrichtungen erfolgen.


## Patentansprüche

1. Verpackungsbehälter mit einem die äusseren Begrenzungen im wesentlichen vollständig umhüllenden Etikett, wobei das Etikett eine Folie oder eine Verbundfolie darstellt, welche eine Trägerfolie resp. eine Trägerfolie und eine Oberflächenfolie enthält, wobei die äusseren Begrenzungsflächen des Behälters mit der Trägerfolie verbunden sind, dadurch gekennzeichnet, dass am Etikett auf der Trägerfolie resp. zwischen der Trägerfolie und der Oberflächenfolie eine durch Vakuumdünnschichttechnik erzeugte keramische Schicht eines Oxides und/oder Nitrides von Metallen oder Halbmetallen oder eines Gemisches von Oxiden und/oder Nitriden von Metallen und/oder Halbmetallen angeordnet ist.

2. Behälter nach Anspruch 1, dadurch gekennzeichnet, dass sich die keramische Schicht auf der Trägerfolie, auf der dem Verpackungsbehälter zugewandten Seite, befindet.

3. Behälter gemäss Anspruch 1, dadurch gekennzeichnet, dass die keramische Schicht auf der Trägerfolie und/oder der Oberflächenfolie auf der Seite oder den Seiten, die jeweils der anderen Folie zugewandt ist, angeordnet ist.

4. Behälter gemäss Anspruch 1, dadurch gekennzeichnet, dass die keramische Schicht auf wenigstens einer Seite wenigstes einer Zwischenfolie aufgebracht ist und die Zwischenfolie zwischen der Trägerfolie und der Oberflächenfolie angeordnet ist.

5. Behälter gemäss Anspruch 1, dadurch gekennzeichnet, dass die keramische Schicht eine Dicke von 5 bis 500 nm aufweist.

6. Behälter gemäss Anspruch 1, dadurch gekennzeichnet, die keramische Schicht ein Oxid der allgemeinen Formel $SiO_x$, wobei x eine Zahl von 1 bis 2 darstellt, oder der allgemeinen Formel $Al_yO_z$, wobei y/z eine Zahl von 0,2 bis 1,5 darstellt, enthält oder daraus besteht.

7. Behälter nach Anspruch 1, dadurch gekennzeichnet, dass die Trägerfolie und/oder die Oberflächenfolie auf der Aussenseite und/oder Innenseite bedruckt oder konterbedruckt sind.

8. Behälter nach Anspruch 7, dadurch gekennzeichnet die Trägerfolie und/oder die Oberflächenfolie und-/oder die Zwischenfolie ein- oder beidseitig bedruckt oder Konterbedruckt sind.

Europäisches
Patentamt

**EUROPÄISCHER RECHERCHENBERICHT**

Nummer der Anmeldung

EP    91 81 0642

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 139 647 (BOC GROUP)<br>*ZUSAMMENFASSUNG*<br>* Seite 1, Zeile 55 - Zeile 65 *<br>* Seite 2, Zeile 8 - Zeile 25 *<br>* Seite 3, Zeile 1 - Zeile 6 *<br>* Seite 4, Zeile 6 *<br>--- | 1,2,5,6 | B32B27/18<br>B65D23/08 |
| D,Y | GB-A-2 205 295 (HART)<br>* Seite 2, Zeile 29 - Seite 3, Zeile 21 *<br>--- | 1,3 | |
| Y | EP-A-0 113 555 (BOC GROUP)<br>* Seite 2, Zeile 5 - Zeile 26 * | 1,3 | |
| A | * Seite 12, Zeile 30; Anspruch 5 *<br>--- | 6,7 | |
| A | US-A-4 051 265 (KIRSHENBAUM ET AL)<br>* Spalte 5, Zeile 13 - Spalte 6, Zeile 38 *<br>--- | 1 | |
| A | DE-A-1 817 770 (WOLF)<br>*DAS GANZE DOKUMENT*<br>--- | 1 | |
| A | GB-A-2 064 427 (WINDLE ET AL)<br>*DAS GANZE DOKUMENT*<br><br>----- | 1,3,5 | **RECHERCHIERTE SACHGEBIETE (Int. Cl.5 )**<br><br>B32B<br>B65D |

Der vorliegende Recherchenbericht wurde für alle Patentansprüche erstellt

| Recherchenort | Abschlußdatum der Recherche | Prüfer |
|---|---|---|
| DEN HAAG | 30 OKTOBER 1991 | MCCONNELL C.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............
& : Mitglied der gleichen Patentfamilie, übereinstimmendes Dokument

EPO FORM 1503 03.82 (P0403)